# EUROPÄISCHE PATENTANMELDUNG

(11) **EP 1 965 086 A1**
(43) Veröffentlichungstag der Anmeldung: **03.09.2008**
(21) Anmeldenummer: 07004384.9
(22) Anmeldetag: 02.03.2007
(51) Int. Cl.: F16B 19/02, F16B 5/02

(54) **Verstiftungsfreie und nachjustierbare Befestigung**

(71) Anmelder: SIEMENS AKTIENGESELLSCHAFT, 80333 München (DE)
(72) Erfinder: Mikulec, Vinko, 47051 Duisburg (DE)

(57) **Zusammenfassung**

Die Erfindung betrifft einen Verstellmechanismus zum Ausrichten eines ersten Bauteils (2) zu einem zweiten Bauteil (3), mit einem ersten Exzenterglied (7) und einem zweiten Exzenterglied (7), wobei das erste Exzenterglied (7) zu an dem ersten Bauteil (2) in einer ersten Drehachse drehbar gelagert ist, und zu an dem zweiten Bauteil (3) in einer zweiten Drehachse drehbar gelagert ist, welche Drehachsen mit einer ersten Exzentrizität beabstandet sind, und wobei das zweite Exzenterglied (7) zu an dem ersten Bauteil (2) in einer dritten Drehachse drehbar gelagert ist, und zu an dem zweiten Bauteil (3) in einer vierten Drehachse drehbar gelagert ist, welche Drehachsen mit einer zweiten Exzentrizität beabstandet sind.

## Beschreibung

Die Erfindung betrifft einen Verstellmechanismus eines ersten Bauteils zu einem zweiten Bauteil.

Derartige Verstellmechanismen bzw. Verbindungssysteme sind bekannt, und werden beispielsweise zum Einstellen einer relativen Lage des einen Bauteils zu dem jeweils anderen Bauteil eingesetzt. Die beiden Bauteile werden z.B. durch Verstiftung miteinander verbunden und mittels der Stifte zueinander in der einmal eingestellten Position fixiert. Beispielsweise können die beiden Bauteile mittels der Verstiftung so miteinander verbunden werden, dass ein erforderliches Spaltmaß einer mit dem einen Bauteil zusammenwirkenden Komponente zu einer weiteren Komponente einer beispielhaften Getriebemaschine eingehalten wird.

Denkbar ist, dass die Bauteile z.B. aus Wartungs- und/oder Reparaturgründen aber wieder voneinander gelöst werden müssen. Möglich ist aber auch, dass die Bauteile nachjustiert werden müssen, da die einmal eingestellte Position nicht den erforderlichen Betriebsbedingungen bzw. dem beispielhaften Spaltmaß entspricht.

Als ein Hauptnachteil der bekannten Verbindungssysteme, insbesondere mittels der Verstiftung der beiden Bauteile ist dabei anzusehen, dass die mittels der Verstiftung miteinander verbundenen und so fixierten Bauteile nicht mehr nachjustierbar ist, wobei ein Veränderung der einmal eingestellten Position nur mit einem erheblichen Aufwand möglich ist. Wird es erforderlich werden, die beiden Bauteile beispielsweise nachzujustieren, wird derzeit eine aufwändige Neuverstiftung durchgeführt.

Der Erfindung liegt daher die Aufgabe zugrunde, einen Verstellmechanismus bzw. ein Verbindungssystem der Eingangs genannten Art mit einfachen Mitteln dahingehend zu verbessern, dass die eingestellte Position der beiden Bauteile zueinander leicht, d.h. ohne großen Aufwand nachjustierbar ist.

Erfindungsgemäß wird die Aufgabe gelöst durch einen Verstellmechanismus zum Ausrichten eines ersten Bauteils zu einem zweiten Bauteil, mit einem ersten Exzenterglied und einem zweiten Exzenterglied, wobei das erste Exzenterglied zu an dem ersten Bauteil in einer ersten Drehachse drehbar gelagert ist, und zu an dem zweiten Bauteil in einer zweiten Drehachse drehbar gelagert ist, welche Drehachsen mit einer ersten Exzentrizität beabstandet sind, und wobei das zweite Exzenterglied zu an dem ersten Bauteil in einer dritten Drehachse drehbar gelagert ist, und zu an dem zweiten Bauteil in einer vierten Drehachse drehbar gelagert ist, welche Drehachsen mit einer zweiten Exzentrizität beabstandet sind.

Vorteilhaft kann die erste Exzentrizität gleich oder ungleich zur Exzentrizität sein. Günstig im Sinne der Erfindung ist, wenn mindestens eines der Exzenterglieder zu dem ersten Bauteil und/oder zu dem zweiten Bauteil feststellbar ist. Günstigerweise ist ein zusätzliches Fixierelement vorgesehen, welches das erste Bauteil zu dem zweiten Bauteil fixiert.

Damit ein Befestigungselement durch eine Durchgangsbohrung bzw. durch das Exzenterglied in Richtung zu einer Aufnahmebohrung geführt werden kann, ist es günstig im Sinne der Erfindung, wenn das Exzenterglied an seinem Einsteckbereich hülsenartig ausgeführt ist, wobei das Exzenterglied eine bezogen auf seine Exzenterachse gesehen sich steig ändernde Wanddicke aufweist. Zweckmäßiger Weise weist der Einsteckbereich eine durchgehende Bohrung auf, deren Mittelachse exzentrisch versetzt ist, also deckungsgleich zur Exzenterachse ist, so dass ein Außendurchmesser des Einsteckbereichs gleich bleibend ausgeführt ist, wobei ein Innendurchmesser des Einsteckbereichs sich stetig ändernd von einem Maximum zu einem Minimum und von dem Minimum zu dem Maximum ausgeführt ist.

Zur hinreichenden Lagerung des Exzenterglieds an dem ersten Bauteil liegt das Exzenterglied mit seinem Kopfteil an dem ersten Bauteil an, wobei das Exzenterglied mit seinem Einsteckbereich bzw. mit seiner Außenwand in der Durchgangsbohrung aufgenommen ist. In bevorzugter Ausgestaltung weist das Exzenterglied an seinem Kopfteil einen umlaufenden Anlageflansch auf, wobei das Exzenterglied mit seinem an dem Einsteckbereich angeordneten Fußbereich zur zum Kopfteil gegenüberliegenden Bohrungsöffnung der Durchgangsbohrung etwas beabstandet ist, so dass quasi ein Spalt gebildet ist.

Zur Aufnahme des Befestigungselementes ist die Aufnahmebohrung in zweckmäßiger Ausgestaltung als Gewindebohrung ausgeführt, weshalb das Befestigungselement günstiger Weise als Schraubenbolzen ausgeführt ist, welcher ein zum Innengewinde der Aufnahmebohrung korrespondierendes Außengewinde an seinem Gewindeschaft aufweist.

In bevorzugter Ausgestaltung weisen die beiden zueinander auszurichtenden Bauteile jeweils eine Durchgangsbohrung und jeweils eine dazu korrespondierende Aufnahmebohrung bzw. Gewindebohrung auf. Mittels einer Hilfsverbindung bzw. des zusätzlichen Fixierelementes können die beiden Bauteile grob zusammengesetzt werden. Das jeweilige Exzenterglied wird mit seinem Einsteckbereich in die jeweilige Durchgangsbohrung eingesteckt, bis dieser mit seinem Kopfteil bzw. mit seinem Anlageflansch an dem ersten Bauteil anliegt. Durch gleich- und/oder gegensinniges Verdrehen der jeweiligen Exzenterglieder können verschiedene gewünschte Bauteillagen erreicht werden. Anschließend kann das Befestigungselement bzw. der Schraubenbolzen durch die Durchgangsbohrung und dem darin aufgenommenen Exzenterglied in Richtung zur Aufnahmebohrung geführt werden und in dieser verschraubt werden.

Durch gleich- oder gegensinniges Verdrehen der Exzenter kann die gewünschte Position eingestellt werden.

Die eingestellte Position kann mit dem zusätzlichen Fixierelement bzw. mit Bolzenschrauben fixiert werden.

Im Falle einer betriebsbedingten Veränderung der peripheren Funktionsteile, also von mit den Bauteilen zusammenwirkenden Komponenten beispielsweise einer Getriebemaschine, können die Befestigungselemente bzw. einer oder alle Bolzenschrauben gelöst werden , so dass die Exzenterglieder, die auch als Kragenbuchsen bezeichnet werden können, durch gleich- und/oder gegensinniges verdrehen die neue gewünschte Lage bzw. Position einstellen können, welche mit den Bolzenschrauben wiederum festlegbar ist.

Weiter vorteilhafte Ausgestaltungen der Erfindung sind in den Unteransprüchen und der folgenden Figurenbeschreibung offenbart. Es zeigen:
- Fig. 1: einen Querschnitt durch einen beispielhaft dargestellten Verstellmechanismus, und
- Fig. 2: eine Draufsicht auf den in Figur 1 dargestellten Verstellmechanismus,
- Fig. 3: eine Prinzipskizze mit gegensinniger Verdrehung der Exzenterglieder, und
- Fig. 4: den Verstellmechanismus aus Figur 1 welches einem beispielhaften Stellzylinder zugeordnet ist.

In den unterschiedlichen Figuren sind gleiche Teile stets mit denselben Bezugszeichen versehen, weswegen diese in der Regel auch nur einmal beschrieben werden.

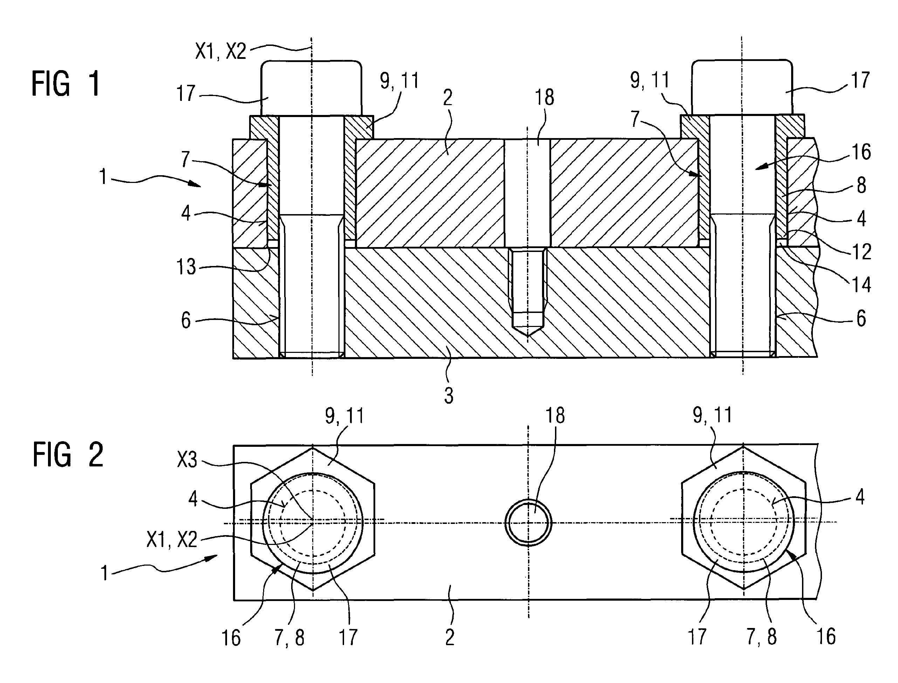

Figur 1, 2 und 3 zeigen einen Verstellmechanismus in verschiedenen Darstellungen zum Ausrichten eines ersten Bauteils 2 zu einem zweiten Bauteil 3, mit einem ersten Exzenterglied 7 (links) und einem zweiten Exzenterglied 7 (rechts), wobei das erste Exzenterglied 7 zu an dem ersten Bauteil 2 in einer ersten Drehachse 91 drehbar gelagert ist, und an dem zweiten Bauteil 3 in einer zweiten Drehachse 92 drehbar gelagert ist, welche Drehachsen mit einer ersten Exzentrizität e1 beabstandet sind, und wobei das zweite Exzenterglied 7 an dem ersten Bauteil 2 in einer dritten Drehachse 93 drehbar gelagert ist, und zu an dem zweiten Bauteil 3 in einer vierten Drehachse 94 drehbar gelagert ist, welche Drehachsen mit einer zweiten Exzentrizität e2 beabstandet sind.

Figur 1 zeigt einen Verstellmechanismus 1 zum Ausrichten eines ersten Bauteils 2 zu einem zweiten Bauteil 3. In dem ersten Bauteil 2 ist zumindest eine Durchgangsbohrung 4 angeordnet, wobei in dem zweiten Bauteil 3 eine dazu korrespondierende Aufnahmebohrung 6 angeordnet ist. In dem dargestellten Ausführungsbeispiel sind zwei Durchgangsbohrungen 4 und zwei dazu korrespondierende Aufnahmebohrungen 6 vorgesehen.

Die Durchgangsbohrung 4 weist jeweils einen größeren Bohrungsdurchmesser auf als die Aufnahmebohrung 6, wobei deren Mittelachsen X1 bzw. X2 deckungsgleich sind.

In die Durchgangsbohrung 4 ist jeweils ein Exzenterglied 7 eingesteckt. Das Exzenterglied 7 wird nachfolgend als Exzenter 7 bezeichnet. Der Exzenter 7 ist hülsenartig mit einem Einsteckbereich 8 und einem Kopfteil 9 ausgeführt. Der Kopfteil 9 ist als Anlageflansch 11 vollumfänglich an dem Exzenter 7 angeordnet, der auch als Kragenbuchse bezeichnet werden kann.

In dem Exzenter 7 ist eine durchgehende Bohrung angeordnet, deren Mittelachse bzw. Exzenterachse X3 bezogen auf die deckungsgleichen Mittelachsen X1 und X2 exzentrisch versetzt ist (Figur 2). Durch die Exzenterachse X3 weist der Exzenter 7 eine erste Exzentrizität bzw. an seinem Einsteckbereich 8 eine sich stetig ändernde Wanddicke auf, was bedeutet, dass sich der Innendurchmesser des Einsteckbereichs 8 stetig ändernd von einem Maximum zu einem Minimum und von dem Minimum zu dem Maximum stetig, also stufenlos verändert. In dem in Figur 1 dargestellten Ausführungsbeispiel ist eine maximale Wanddicke des Exzenters 11 jeweils auf der rechten Zeichnungsebene dargestellt, wobei gegenüberliegend, also auf der linken Zeichnungsebene eine minimale Wanddicke dargestellt ist. Ein Außendurchmesser bzw. die Außenwand des Exzenters 11 bzw. des Einsteckbereichs 8 liegt im Wesentlichen spielfrei vollumfänglich an der Innenwand der Durchgangsbohrung 4 an. Der zweite Exzenter 7 weist entsprechend eine zweite Exzentrizität auf.

Der erste Exzenter 7 ist zu an dem ersten Bauteil in einer ersten Drehachse drehbar gelagert und zu an dem zweiten Bauteil in einer zweiten Drehachse drehbar gelagert, wobei die beiden Drehachse mit der ersten Exzentrizität beabstandet sind. Der zweite Exzenter 7 ist zu an dem ersten Bauteil in einer dritten Drehachse drehbar gelagert und zu an dem zweiten Bauteil in einer vierten Drehachse drehbar gelagert, wobei die beiden Drehachse mit der zweiten Exzentrizität beabstandet sind. Die beiden Exzentrizitäten können gleich und/oder ungleich sein. Mindestens ein Exzenter 7 ist zu dem ersten und/oder dem zweiten Bauteil feststellbar.

Mit seinem Kopfteil 9 bzw. seinem Anlageflansch 11 liegt der Exzenter 7 auf dem ersten Bauteil 2 auf. Der Exzenter 7 endet mit seiner zum Kopfteil 9 gegenüberliegenden Fußseite 12 kurz vor der in der Zeichnungsebene unteren Öffnung 13 der Durchgangsbohrung 4, so dass zwischen der Fußseite 12 und einer entsprechenden Oberfläche des zweiten Bauteils 3 ein Spalt 14 gebildet ist.

Durch den in der Durchgangsbohrung 4 im Wesentlichen spielfrei aufgenommenen Exzenter 7 ist ein Befestigungselement 16 geführt. Das Befestigungselement 16 ist in dem dargestellten Ausführungsbeispiel als Bolzenschraube ausgeführt, welche an seinem Gewindeschaft ein Außengewinde trägt. Die Aufnahmebohrung 6 weist ein zum Außengewinde korrespondierendes Innengewinde auf, so dass das Befestigungselement 16 bzw. die Bolzenschraube in die Aufnahmebohrung einschraubbar ist. Mit seinem Bolzenkopf 17 liegt die Bolzenschraube an dem Anlageflansch 11 an. Der Anlageflansch 11 dient somit nicht als Widerlager des Exzenters 7, sondern kann zudem die Funktion eines Sicherungsringes der Bolzenschraube aufweisen.

Die beiden Bauteile 2,3 weisen zudem eine Hilfsverbindung 18 bzw. ein zusätzliches Fixierelement 18 auf, welches das erste Bauteil 2 zu dem zweiten Bauteil 3 fixiert.

Mittels des erfindungsgemäßen Verstellmechanismus 1 sind die Bauteile 2,3 bzw. damit zusammenwirkende Komponenten, beispielsweise einer Getriebemaschine in einfacher Weise nachjustierbar miteinander verbunden. An den beiden Befestigungselementen 16 bzw. den Bolzenschrauben werden dazu die beiden identisch ausgestalteten Exzenter 7 bzw. exzentrischen Kragenbuchsen montiert. Durch ein Verdrehen bzw. bevorzugt gleichzeitiges Verdrehen der Exzenter 7 können in leichter Art und Weise verschiedene gewünschte Bauteillagen erreicht und danach durch festschrauben der Befestigungselemente 16 festgehalten bzw. festgelegt werden. Im Falle einer betriebsbedingten Veränderung der peripheren Funktionsteile, können die Befestigungselemente gelöst werden, wobei mittels der Exzenter 7 die neue gewünschte Position eingestellt werden kann.

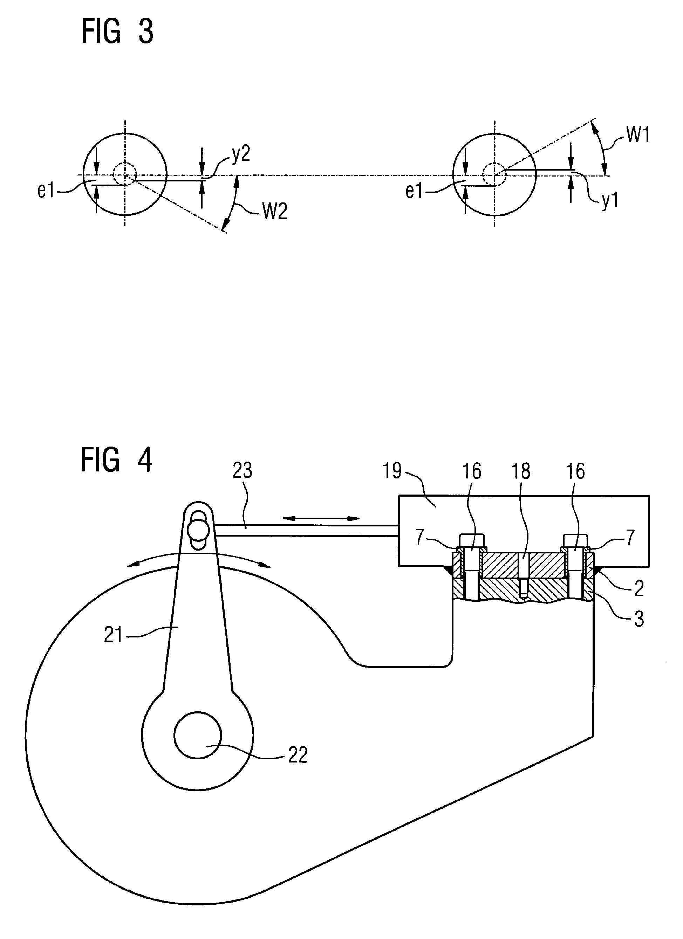

In Figur 3 ist ein gegensinniges Verdrehen der Exzenter 7 dargestellt. Möglich ist natürlich auch ein gleichsinniges Verdrehen der Exzenter 7.

Der Verstellmechanismus 1 kann beispielsweise in einem Heißgasexpander eingesetzt werden, um seinen Spiraleinsatz radial auszurichten. An dem Spiraleinsatz ist z.B. ein Konturring angeordnet, dessen Laufradseite zu einem Laufrad bzw. dessen Laufschaufeln orientiert ist. Zwischen der Laufradseite und dem Laufrad bzw. den Laufschaufeln ist ein Spalt angeordnet, der so je nach Betriebsbedingungen oder Erfordernissen einstellbar und leicht nachjustierbar ist. Natürlich soll der Verstellmechanismus 1 nicht auf diesen beispielhaften Einsatzzweck beschränkt sein.

Figur 4 zeigt ein weiteres Anwendungsbeispiel des Verstellmechanismus 1. Der Verstellmechanismus 1 kann beispielhaft zur Ausrichtung eines Stellzylinders 19 verwendet werden, der als Antrieb für einen Stellhebel 21 einer Stellwelle 22 ausgeführt sein kann. Der Stellzylinder 19 kann hydraulisch, pneumatisch oder mit einer anderen geeigneten Antriebsart angetrieben werden, und wirkt über seine Kolbenstange 23 auf den Stellhebel 21. Der Stellzylinder 19 kann mit dem ersten Bauteil 2 des Verstellmechanismus 1 in geeigneter Weise verbunden sein. Das erste Bauteil 2 ist in der zuvor beschriebenen Art mit dem zweiten Bauteil 3 verbunden. Das zweite Bauteil 3 ist beispielhaft als Gehäusedeckel ausgeführt, wobei die Stellwelle 22 in einem dem Gehäusedeckel zugeordneten Gehäuse aufgenommen ist. Das erste Bauteil 2 ist mit einer nicht dargestellten Konsole verbunden, die den Stellzylinder 19 trägt, so dass der Stellzylinder 19 mittels des Verstellmechanismus 1 über die Ausrichtung der Konsole ausgerichtet wird.

## Patentansprüche

1. Ausrichten eines ersten Bauteils (2) zu einem zweiten Bauteil (3),
mit einem ersten Exzenterglied (7) und einem zweiten Exzenterglied (7),
wobei das erste Exzenterglied (7) zu an dem ersten Bauteil (2) in einer ersten Drehachse (91) drehbar gelagert ist, und an dem zweiten Bauteil (3) in einer zweiten Drehachse (92) drehbar gelagert ist, welche Drehachsen mit einer ersten Exzentrizität (e1) beabstandet sind, und
wobei das zweite Exzenterglied (7) an dem ersten Bauteil (2) in einer dritten Drehachse (93) drehbar gelagert ist, und zu an dem zweiten Bauteil (3) in einer vierten Drehachse (94) drehbar gelagert ist, welche Drehachsen mit einer zweiten Exzentrizität'(e2) beabstandet sind.

2. Verstellmechanismus nach Anspruch 1,
**dadurch gekennzeichnet, dass**
die erste Exzentrizität gleich der zweiten Exzentrizität ist.

3. Verstellmechanismus nach Anspruch 1,
**dadurch gekennzeichnet, dass**
die erste Exzentrizität ungleich der zweiten Exzentrizität ist.

4. Verstellmechanismus nach einem der vorhergehenden Ansprüche,
**gekennzeichnet durch**
einzusätzliches Fixierelement (18), welches das erste Bauteil (2) zu dem zweiten Bauteil (3) fixiert.

5. Verstellmechanismus nach einem der vorhergehenden Ansprüche, ,
**dadurch gekennzeichnet, dass**
das jeweilige Exzenterglied (7) hülsenartig ausgeführt ist.

6. Verstellmechanismus nach einem der vorhergehenden Ansprüche,
**dadurch gekennzeichnet, dass**
das Exzenterglied (7) eine bezogen auf seine Exzenterachse (X3) sich stetig ändernde Wanddicke aufweist.

7. Verstellmechanismus nach einem der vorhergehenden Ansprüche,
**dadurch gekennzeichnet, dass**
das Exzenterglied (7) mit seinem Kopfteil (9) an dem ersten Bauteil (2) anliegt, und dass das Exzenterglied (7) mit seinem Einsteckbereich (8) in der Durchgangsbohrung (4) aufgenommen ist.

8. Verstellmechanismus nach einem der vorhergehenden Ansprüche,
**gekennzeichnet durch**
eine als Gewindebohrung ausgeführte Aufnahmebohrung (3),
wobei ein Befestigungselement (16) als Bolzenschraube ausgeführt ist.
